# EUROPÄISCHE PATENTSCHRIFT

(11) **EP 4 069 923 B1**
(45) Veröffentlichungstag und Bekanntmachung des Hinweises auf die Patenterteilung: **10.07.2024**
(21) Anmeldenummer: 20828261.6
(22) Anmeldetag: 01.12.2020
(51) Int. Cl.: E05B 63/00, E05C 3/04, E05B 15/02, E05B 1/00, E05C 3/00, E05C 3/10

(54) **VERSCHLUSSHALTER**
STRIKER
GÂCHE

(30) Priorität: 06.12.2019 DE 102019133355
(43) Veröffentlichungstag der Anmeldung: 12.10.2022
(73) Patentinhaber: EMKA Beschlagteile GmbH & Co. KG, 42551 Velbert (DE)
(72) Erfinder: WARDI, Florian, 42327 Wuppertal (DE); KUHNKE, Thorsten, 42327 Wuppertal (DE); KUHNEN, Andreas, 42327 Wuppertal (DE)
(74) Vertreter: Feder Walter Ebert
(86) Internationale Anmeldenummer: PCT/DE2020/101013
(87) Internationale Veröffentlichungsnummer: WO 2021/110212

(56) Entgegenhaltungen:
- DE-A1- 102014 100 487
- DE-A1- 102015 114 357
- DE-A1- 102018 102 286
- DE-A1- 3 308 319
- DE-C2- 19 943 083
- DE-C2- 3 308 319
- DE-U1- 202005 007 345
- FR-A- 1 333 904
- NL-C2- 1 017 803

## Beschreibung

Die Erfindung betrifft einen Verschlusshalter mit einem Montageelement, über welches der Verschlusshalter in einer Montageebene an einem Türrahmen befestigbar ist, und einer gegenüber der Montageebene beabstandet angeordneten Haltefläche, die von einem türseitigen Verschlussriegel zur Verriegelung der Tür hintergreifbar ist, wobei ein Halteschuh vorgesehen ist, der zur Einstellung des Abstandes der Haltefläche gegenüber der Montageebene lösbar an einem Halteelement befestigbar ist, wobei der Halteschuh zur Einstellung des Abstandes in zwei verschiedenen Montagepositionen an dem Halteelement befestigbar ist.

Verschlusshalter kommen bei verschließbar ausgestalteten Öffnungen zum Einsatz. Dort ermöglichen sie als Teil eines Verschlusses das Verriegeln von Türen, Luken oder Fenster an einem die jeweilige Öffnung umgebenden Rahmen. Nachfolgend wird stellvertretend für diese verschiedenen Elemente von einer Tür gesprochen.

Die Verschlusshalter weisen in der Regel ein Montageelement auf, über das der Verschlusshalter mit dem Türrahmen in einer Montageebene, bspw. über eine Schraubverbindung, verbunden werden kann. Die Montageebene des Montageelements ist dann identisch mit der Oberfläche des Türrahmens, auf der der Verschlusshalter bzw. das Montageelement befestigt ist.

Weiterhin ist eine gegenüber der Montageebene beabstandet angeordnete Haltefläche vorgesehen, so dass zwischen der Montageebene und der Haltefläche ein Zwischenraum entsteht. Soll nun die Tür verriegelt werden, kann ein türseitiger Verschlussriegel des Verschlusses, bspw. eine drehbare Vorreiberzunge, in diesen Zwischenraum bewegt werden, so dass der Verschlussriegel die Haltefläche hintergreift. In dieser Stellung ist die Tür dann gegenüber dem Türrahmen festgelegt und nicht mehr bewegbar. Um die Tür dann wieder zu öffnen, muss der Verschlussriegel zurück in eine Stellung verbracht werden, in der die Haltfläche nicht mehr hintergriffen wird.

Oft ist es wünschenswert, dass zwischen der Tür und dem Türrahmen Dichtungselemente, bspw. in Form von Dichtprofilen oder Dichtwülsten, vorgesehen sind, bspw. um einen Gasaustauch zu verringern und damit einhergehende Wärmeverluste und/oder Luftverluste zu verhindern. Es ist daher erforderlich, dass in der geschlossenen Stellung, die Tür die entsprechenden Dichtprofile verformt und einen gewissen Anpressdruck auf die Dichtungselemente ausübt.

Nach längerem Gebrauch oder auch aufgrund von Fertigungstoleranzen kann es dazu kommen, dass die Dichtungen von der Tür nicht in genügendem Maße verformt werden und es im daher erforderlich ist, die Schließposition der Tür anzupassen. Eine entsprechende Anpassung kann bspw. durch eine Einstellung des Abstandes der Haltefläche gegenüber der Montageebene realisiert werden. Denn je geringer der entsprechende Abstand ist, desto näher liegt die Tür in der verriegelten Stellung am Türrahmen und desto höher ist auch der Anpressdruck der Tür.

In der DE 10 2018 103 373 wird bspw. vorgeschlagen, die Haltefläche über eine Stellmechanik gegenüber der Montageebene zu bewegen. Zwar ermöglicht diese Vorrichtung eine stufenlose Abstandseinstellung, jedoch ist es zur Verstellung erforderlich, zwei Schauben parallel zu lösen oder festzuziehen. Diese Art der Betätigung hat sich zwar in der Vergangenheit durchaus bewährt, bei unsachgemäßer Anwendung, wenn die beiden Schrauben nicht gleichmäßig bewegt werden, kann es jedoch dazu kommen, dass die Elemente sich verkanten.

In den Dokumenten DE3308319 und FR1333904 wird einen Verschlusshalter gemäß dem Oberbegriff des Anspruchs 1 offenbart.

Davon ausgehend stellt sich die Erfindung die **Aufgabe**, einen Verschlusshalter anzugeben, der eine einfachere Einstellung des Abstandes erlaubt.

Diese Aufgabe wird bei einem Verschlusshalter der eingangs genannten Art dadurch **gelöst**, dass der Halteschuh zwei Schenkel unterschiedlicher Dicke aufweist, wobei in der ersten Montageposition der dickere Schenkel und in der zweiten Montageposition der dünnere Schenkel der Montageebene zugewandt ist.

Über den Halteschuh kann der Abstand der Halteebene gegenüber der Montageebene auf sehr einfache Weise eingestellt und verändert werden. Die lösbare Anordnung des Halteschuhs an einem Halteelement ermöglicht eine sehr rasche Montage und Demontage, so dass sich der Abstand zwischen der Haltefläche und der Montageebene selbst von ungelerntem Personal schnell und unkompliziert einstellen lässt.

Im Hinblick auf die Verbindung des Halteschuhs mit dem Halteelement hat sich als vorteilhaft herausgestellt, wenn der Halteschuh auf das Halteelement aufsteckbar ist. Durch ein Aufstecken kann der Halteschuh sehr einfach und ohne den Einsatz von Werkzeug mit dem Halteelement verbunden oder auch wieder vom Halteelement gelöst werden. Der Halteschuh kann aus einer Montagerichtung auf das Halteelement aufgesteckt und entsprechend entgegen der Montagerichtung wieder von dem Halteelement abgezogen werden, wobei die Montagerichtung dabei parallel zu der Montagefläche ausgerichtet sein kann. Ferner kann die Montagerichtung im Wesentlichen quer zur Längsausdehnung des Halteelements angeordnet sein, so dass der Halteschuh im Grunde aus der Richtung des Verschlussriegels bzw. aus der Richtung der Drehachse des Verschlussriegels auf das Halteelement aufgesteckt werden kann. Alternativ ist aber auch ein Aufstecken aus der entgegengesetzten Richtung möglich.

Der Halteschuh kann in der verbundenen bzw. aufgesteckten Stellung mit dem Halteelement verrastet sein, so dass eine zuverlässige Verbindung des Halteschuhs mit dem Halteelement gewährleistet wird und der Halteschuh nicht unbeabsichtigt vom Halteelement abrutschen kann. Weiterhin ist es auch möglich, dass der Halteschuh auf das Halteelement aufklipsbar ist. Auch hierdurch wird eine selbsthaltende sichere Verbindung geschaffen, die ohne Werkzeug auch wieder gelöst werden kann. Alternativ ist es aber auch möglich, den Halteschuh bspw. über eine Schraubverbindung mit dem Halteelement zu verbinde.

Um den Abstand zwischen der Haltefläche und der Montageebene variabel einstellen zu können, ist erfindungsgemäß der Halteschuh zur Einstellung des Abstands in zwei verschiedenen Montagepositionen an dem Halteelement befestigbar. Jeder Montageposition ist dabei ein spezifischer Abstand zugeordnet, so dass durch die Änderung der Montageposition auch die Änderung des Abstandes der Haltefläche gegenüber der Montageebene eingestellt werden kann. Somit kann dann auch jeder Montageposition eine vordefinierte Türstellung in der geschlossenen Position zugeordnet werden bzw. die auf die Dichtelemente wirkende Anpresskraft von der Montageposition des Halteschuhs abhängig sein.

Im Hinblick auf die beiden Montagepositionen hat es sich als vorteilhaft herausgestellt, wenn der Halteschuh in einer Montageposition in Bezug zu der anderen Montageposition um 180 Grad gedreht ist. Es ist somit sehr einfach, zwischen den beiden Montagepositionen hin und her zu wechseln und damit den Abstand schnell einzustellen. Ein am Halteelement befestigter Halteschuh muss lediglich vom Halteelement entfernt, dann um 180° gedreht und wieder an dem Halteelement befestigt werden. Dies ist ein sehr intuitiv durchzuführender Arbeitsschritt, der keiner umfangreichen Einweisung bedarf.

Weiterhin hat es sich als vorteilhaft herausgestellt, wenn in der ersten Montageposition der Abstand der Haltefläche gegenüber der Montageebene geringer ist als in der zweiten Montageposition. In der ersten Montageposition kann somit der Verschlussriegel näher an der Montageebene und dadurch auch näher am Türrahmen anliegen, wodurch die auf die zwischen der Tür und dem Türrahmen angeordnete Dichtung wirkende Anpresskraft vergleichsweise groß ist. Zwar ist eine große Anpresskraft im Grunde genommen positiv, um eine zuverlässige Dichtung der Tür zu gewährleisten, jedoch geht dies damit einher, dass sich die Tür nur sehr schwer schließen lässt. In der zweiten Montageposition ist der Abstand hingegen größer als in der ersten Montageposition, so dass sich in dieser Stellung die Tür einfacher schließen lässt, die Dichtung dann aber gegebenenfalls nicht ganz so stark komprimiert wird wie in der ersten Montageposition. Die Wahl der Montageposition muss somit in Abhängigkeit mehrerer Faktoren getroffen werden. Über die verschiedenen Montagepositionen können zudem auch Fertigungstoleranzen ausgeglichen werden. Weiterhin ist es denkbar, dass der Halteschuh zunächst in der zweiten Montageposition montiert wird, es dann aber beispielsweise aufgrund von Alterungserscheinungen der Dichtelemente erforderlich ist, diese nach längerer Einsatzzeit stärker zu komprimieren, um eine zuverlässige Dichtwirkung aufrechtzuerhalten. In diesem Fall kann der Halteschuh dann von dem Halteelement abgezogen, um 180 Grad gedreht und dann in der ersten Montageposition wieder auf das Halteelement aufgesteckt werden.

Im Hinblick auf die Ausrichtung der Haltefläche hat es sich als vorteilhaft erwiesen, wenn die Haltefläche und die Montageebene parallel zueinander angeordnet sind. Dies ermöglicht, dass auch der Verschlussriegel in der Verriegelungsstellung möglichst vollflächig auf der Halteebene aufliegt, was eine gute Kraftübertragung und somit einen sicheren Halt des Verschlussriegels gewährleistet. Die Haltefläche kann auch parallel zur Oberfläche des Türrahmens angeordnet sein. Ferner wird durch eine vollflächige Auflage des Verschlussriegels auf der Haltefläche bzw. auf dem Halteschuh auch vermieden, dass sich der Verschlussriegel verkantet oder dieser bei einer Bewegung, insbesondere in die Entriegelungsstellung, den Halteschuh unbeabsichtigt von dem Halteelement abzieht. Es ist nicht zwingend erforderlich, dass es sich bei der Haltefläche um eine ebene Fläche handelt, sondern die Haltefläche kann bspw. auch abschnittsweise gekrümmt sein.

In Hinblick auf die Einstellung hat es sich als vorteilhaft erwiesen, wenn der Abstand der Haltefläche gegenüber der Montageebene in Normalenrichtung einstellbar ist. Die Normalenrichtung steht senkrecht auf der Montageebene, so dass bei einer Änderung des Abstandes der Haltefläche gegenüber der Montageebene jeder Punkt der Haltefläche gleichmäßig von der Montageebene wegbewegt wird.

Erfindungsgemäß weist der Halteschuh zwei Schenkel unterschiedlicher Dicke auf. Über die Dicke dieser beiden Schenkel kann der Abstand der Haltefläche gegenüber der Montageebene eingestellt werden. In der ersten Montageposition ist der dickere Schenkel der Montageebene zugewandt und in der zweiten Montageposition ist der dünnere Schenkel der Montageebene zugewandt.

Die beiden Schenkel können sich parallel zueinander erstrecken, und wenn der Halteschuh mit dem Halteelement verbunden ist, kann ein Schenkel auf der der Montageebene abgewandten Seite des Halteelements angeordnet sein und ein Schenkel kann auf der der Montageebene zugewandten Seite des Halteelements angeordnet sein. Bei der Haltefläche kann es sich jeweils um die Fläche handeln, auf der der Verschlussriegel in der Verriegelungsstellung abgleitet bzw. die Oberfläche des Schenkels des Halteschuhs, die der Montageebene zugewandt ist.

Ferner können die Oberflächen der Schenkel als Gleitflächen ausgestaltet sein, so dass der Verschlussriegel bei einer Verriegelung oder einer Entriegelung auf diesen Oberflächen abgleiten kann. Der Verschlussriegel gleitet bei der Verriegelung und der Entriegelung immer auf der Oberfläche des Schenkels ab, der in der entsprechenden Montageposition der Montageebene zugewandt ist und der somit den Abstand zu der Montageebene definiert. Weiterhin hat es sich als vorteilhaft herausgestellt, wenn der Halteschuh einen U-förmigen Querschnitt aufweist. Ein entsprechender Querschnitt erlaubt, dass der Halteschuh aus einer Richtung auf das Halteelement aufgesteckt werden und das Halteelement insbesondere formschlüssig umgreifen kann.

In Weiterbildung der Erfindung wird ferner vorgeschlagen, dass das Halteelement über zwei Stützen mit dem Montageelement verbunden ist. Über diese zwei Stützen kann das Halteelement parallel beabstandet zum Montageelement angeordnet sein, so dass das Halteelement zusammen mit den beiden Stützen im Wesentlichen eine C-förmige Kontur aufweist. Die beiden Stützen können senkrecht zur Montageebene und senkrecht zur Haltefläche angeordnet sein, so dass auch die Haltefläche parallel zur Montageebene verläuft. Die beiden Stützen können an den jeweiligen Randbereichen des Halteelements mit diesem verbunden sein, so dass zwischen den beiden Stützen genug Platz verbleibt und der türseitige Verschlussriegel bei einer Drehbewegung das Halteelement bzw. die Haltefläche hintergreifen kann.

Im Hinblick auf die Ausgestaltung des Halteschuhs hat es sich als vorteilhaft erwiesen, wenn dieser mindestens einen Federarm aufweist, über den der Halteschuh mit dem Halteelement und/oder der oder den Stützen verrasten kann. Über den Federarm kann der Halteschuh somit lösbar mit dem Halteelement verbunden und sicher an diesem gehalten werden. Um eine gleichmäßige Kraftverteilung zu gewährleisten, haben sich in der Praxis jedoch mindestens zwei Federarme als vorteilhaft bewährt. Der oder die Federarme können jeweils eine oder auch mehrere Rastnasen aufweisen, die dafür sorgen, dass sich der oder die Federarme bei einem Aufstecken des Halteschuhs auf das Halteelement selbstständig verformen und dann selbstständig beim Erreichen der Endposition das Halteelement oder die Stützen hintergreifen. Die Federarme und die Rastnasen sind vorteilhaft derart ausgestaltet, dass der Halteschuh dann auch ohne den zusätzlichen Einsatz von Werkzeug wieder vom Halteelement entfernt werden kann. Die Federarme können seitlich am Halteschuh angeordnet sein und das Halteelement und/oder die Stützen in den Montagepositionen klammerartig umgreifen. Weiterhin ist es auch möglich, dass der Halteschuh über eine Schaubverbindung mit dem Halteelement und/oder den Stützen verbunden ist.

In Weiterbildung der Erfindung hat es sich als vorteilhaft herausgestellt, wenn der Halteschuh vier Federarme aufweist. Dabei kann jeweils ein Federarm an jeder Seite des Schenkels angeordnet sein. Die vier Federarme können Rastnasen aufweisen, die alle in eine Richtung weisen. In der Montageposition können jeweils die Rastnasen von zwei Federarmen das Halteelement hintergreifen, insbesondere die Rastnasen der Federarme, die auf der Seite des schmaleren Schenkels angeordnet sind.

Damit der Halteschuh zuverlässig mit dem Halteelement verbunden werden kann, kann das Halteelement eine Führung für den Halteschuh aufweisen. Die Führung kann ein Verhaken oder Verkanten des Halteschuhs beim Aufschieben auf das Halteelement verhindern, was insofern die Montage und die Demontage des Halteschuhs noch weiter vereinfacht. Die Führung kann zwei Führungsstege umfassen, die zur Linearführung des Halteschuhs dienen. Der Halteschuh kann in der verbundenen Stellung zwischen diesen beiden Stegen angeordnet sein. Die Führung hat sich insbesondere dann als vorteilhaft herausgestellt, wenn der Halteschuh vier Federarme aufweist und/oder wenn der Halteschuh kürzer als das Halteelement ausgestaltet ist.

Weiterhin ist es aber auch möglich, dass sich der Halteschuh über die gesamte Länge des Halteelements erstreckt. In diesem Fall ist nicht unbedingt eine zusätzliche Führung am Halteelement erforderlich, sondern die Federarme, die das Halteelement und/oder die Stützen seitlich umgreifen können, können zu einer entsprechenden Führung des Führungsschuhs gegenüber dem Halteelement dienen.

In Weiterbildung der Erfindung kann der Halteschuh eine Aufnahme zur zumindest abschnittsweisen Aufnahme eines Anschlags aufweisen. Über die Aufnahme kann der Anschlag mit dem Verschlusshalter bzw. mit dem Montageelement und/oder dem Halteelement lösbar verbunden werden, so dass der Halteschuh insofern als Haltevorrichtung für den Anschlag dient. Die Aufnahme kann zwischen dem oder den Federarmen und den Schenkeln angeordnet und nach Art eines Langlochs ausgestaltet sein.

Der Anschlag kann als Wechselanschlag ausgestaltet sein und lösbar mit einer mehrere Anschlagaufnahmen verbunden sein. Über den Halteschuh kann der Anschlag sicher in der Anschlagaufnahme gehalten werden, so dass dem Halteschuh insofern eine Doppelfunktion zukommt.

Weiterhin hat es sich als vorteilhaft erwiesen, wenn das Halteelement einstückig mit den Stützen und mit dem Montageelement verbunden ist. Das Halteelement, die Stützen und das Montageelement können somit in einem Arbeitsschritt hergestellt und beispielsweise als Spritzgussteil ausgestaltet sein. Dies ermöglicht eine einfache und kostengünstige Serienfertigung.

Im Hinblick auf den Halteschuh hat es sich als vorteilhaft herausgestellt, wenn dieser aus Kunststoff, insbesondere aus einer POM-Kunststoffverbindung, hergestellt ist. Auch der Flusshalter kann somit kostengünstig und in hoher Stückzahl in einem Spritzgussverfahren hergestellt werden. POM-Kunststoff hat den Vorteil, dass dieser sehr gute Gleiteigenschaften aufweist, so dass es beim Einschwenken des Verschlussriegels zum Verriegeln der Tür oder beim Ausschwenken des Verschlussriegels zum Entriegeln der Tür nicht zu einem Materialabrieb kommt. Da der Verschlussriegel in der Regel vergleichsweise großen Kräften ausgesetzt ist, ist dieser in der Regel aus Metall, insbesondere aus verzinktem Stahl, hergestellt. Würde es zu einem Materialabrieb kommen, könnte die den Stahl schützende Zinkschicht abgerieben werden und es könnte dann zu Korrosionen kommen. Dies wird durch eine entsprechend gute Gleiteigenschaft des Halteschuhs verhindert. Insofern eignet sich der Verschlusshalter dann beispielsweise auch zum Einsatz im Offshore-Bereich. Neben Kunststoffen können bspw. auch Messing oder Bronze eingesetzt werden, die ebenfalls gute Gleiteigenschaften aufweisen. Auch eine Oberflächenbeschichtung des Halteschuhs mit einem gleitfähigen Material wäre möglich.

Im Hinblick auf die eingangs genannte Aufgabe wird ferner ein Verschluss mit einem Verschlusshalter vorgeschlagen, der in der vorstehend beschriebenen Weise ausgestaltet ist. Es ergeben sich die bereits im Hinblick auf den Verschlusshalter beschriebenen Vorteile. Ferner wird eine Tür mit einem einen entsprechenden Verschlusshalter aufweisenden Verschluss vorgeschlagen.

Auf weitere Einzelheiten und Vorteile der Erfindung soll nachfolgend anhand der beigefügten Zeichnungen eines Ausführungsbeispiels näher eingegangen werden. Darin zeigen:
- Fig. 1: einen Verschlusshalter in einer perspektivischen Seitenansicht;
- Fig. 2: den Verschlusshalter gemäß Fig. 1 mit einem aufgestecktem Halteschuh;
- Fig. 3: eine Schnittansicht des Verschlusshalters mit einem Halteschuh in einer ersten Montageposition;
- Fig. 4: den Verschlusshalter gemäß Fig. 3 in einer zweiten Montageposition;
- Fig. 5: eine perspektivische Seitenansicht des Halteschuhs in einer ersten Ausgestaltung;
- Fig. 6: eine perspektivische Seitenansicht des Halteschuhs in einer zweiten Ausgestaltung;
- Fig. 7: eine Tür, die in verschiedenen Ausrichtungen an einem Türrahmen angeordnet ist;
- Fig. 8a und 8b: perspektivische Ansichten eines Riegelgehäuses eines Verschlusses mit einem Anschlag in zwei verschiedenen Positionen;
- Fig. 9a und 9b: Schnittansichten durch die Riegelgehäuse gemäß Fig. 8a und 8b;
- Fig. 10a bis 10d: perspektivische Ansichten eines Verschlusshalters mit einem Anschlag in zwei verschiedenen Anschlagpositionen;
- Fig. 11: eine perspektivische Seitenansicht eines Verschlusshalters beim Einstecken des Anschlags und beim Aufstecken des Halteschuhs;
- Fig. 12: eine perspektivische Schnittansicht durch einen Verschlusshalter mit einem Anschlag und einem Halteschuh in einer ersten Ausgestaltungsform;
- Fig. 13: perspektivische Schnittansicht durch einen Verschlusshalter mit einem Anschlag und einem Halteschuh in einer zweiten Ausgestaltungsform; und
- Fig. 14a bis 14d: verschiedene perspektivische Schnittansichten bei der Entriegelung des Verschlusses.

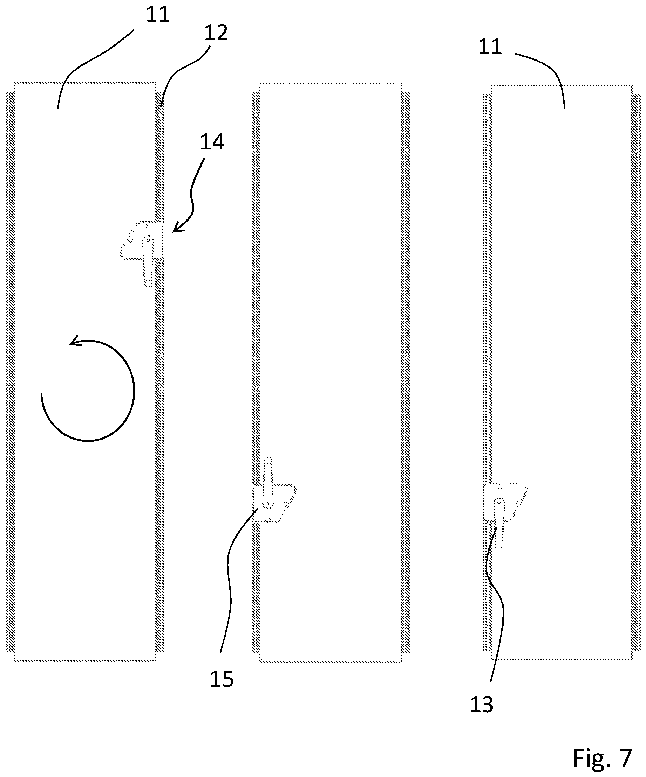

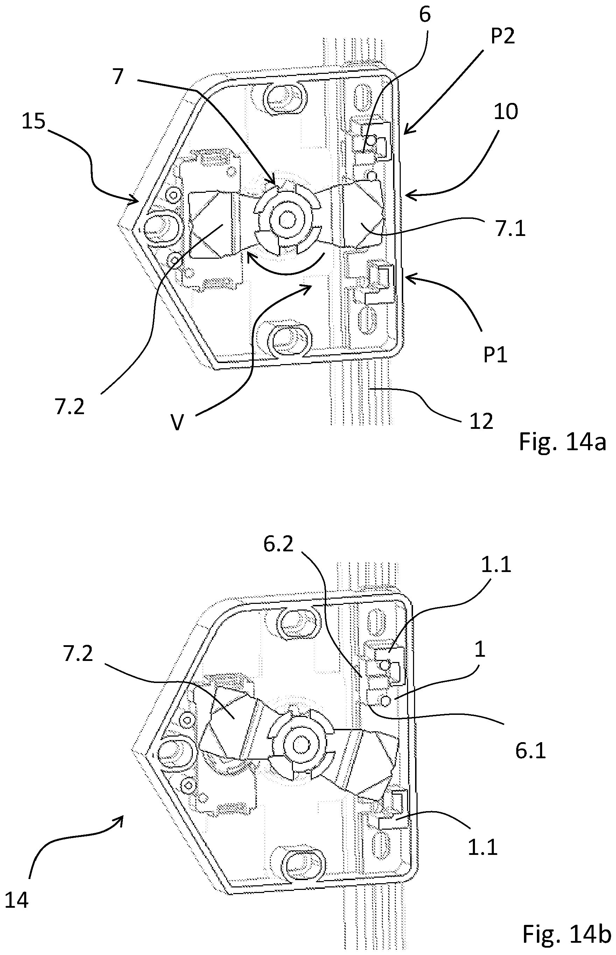

Um eine Tür 11 gegenüber einem Türrahmen 12 festzulegen, so dass die Tür 11 nicht geöffnet werden kann, ist ein Verschluss 14 mit einem rahmenseitigen Verschlusshalter 10 und einem türseitigen Verschlussriegel 7 vorgesehen., vgl. Fig. 7 Der Verschlussriegel 7 ist dabei drehbar in einem Riegelgehäuse 15 gelagert und kann zwischen einer Verriegelungsstellung V und einer Entriegelungsstellung E hin und her gedreht werden. In der Verriegelungsstellung V greift der Verschlussriegel 7 in den Verschlusshalter 10 ein, so dass dann die Tür 11 gegen über dem Rahmen 12 festgelegt ist und nicht mehr geöffnet werden kann. Um die Tür 11 zu öffnen, muss der Verschlussriegel 7 zunächst wieder in eine Entriegelungsstellung E verdreht werden, in der der Verschlussriegel 7 nicht mehr in den Verschlusshalter 10 eingreift. Die Drehung des Verschlussriegels 7 von der Verriegelungsstellung V in die Entriegelungsstellung E wird nachfolgend anhand der Fig. 14a bis d noch näher erläutert werden.

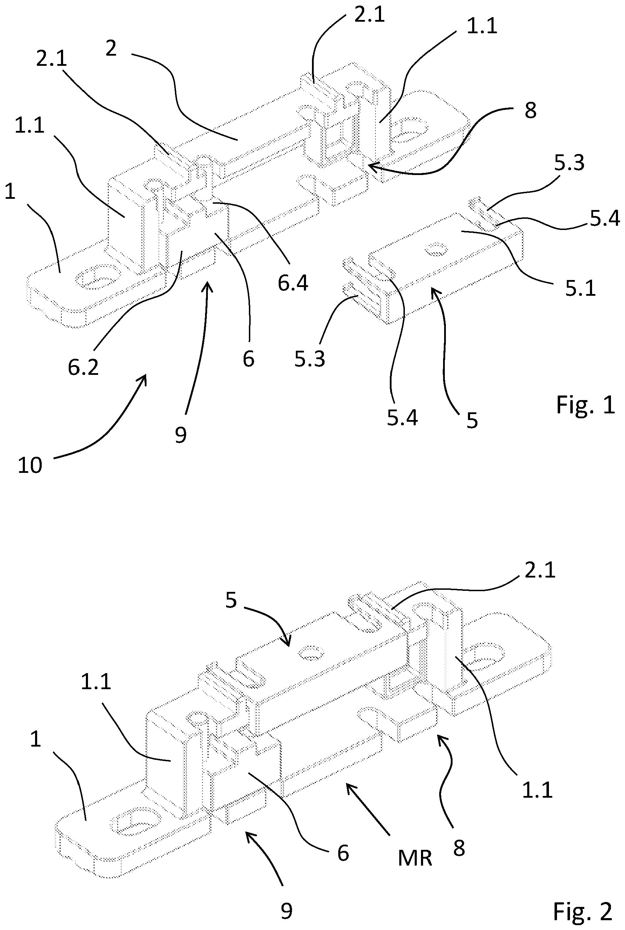

Zunächst soll nun die Ausgestaltung des Verschlusshalters 10 anhand der Darstellung in der Fig. 1 beschrieben werden. Der Verschlusshalter 10 weist ein Montageelement 1 auf, welches nach Art einer Grundplatte ausgestaltet ist und über welches der Verschlusshalter 10 mit dem Rahmen 12 einer Tür 11 verbunden werden kann. Das längliche Montageelement 1 weist dafür auf jeder Seite eine Bohrung in Form eines Langlochs auf, über welche das Montageelement 1 mit dem Türrahmen 12 verschraubt werden kann. Durch die Ausgestaltung als Langloch kann das Montageelement 1, auch wenn es bereits über Schrauben mit dem Rahmen 12 verbunden ist, noch in gewissen Grenzen verschoben werden, solange die Schauben noch nicht fest angezogen sind. Nach der Ausrichtung des Montageelements 1 werden die Schrauben dann angezogen, so dass dann eine weitgehende Bewegung des Montageelements 1 gegenüber dem Rahmen 12 nicht mehr möglich ist. Der Verschlusshalter 10 kann somit über das Montageelement 1 in einer Montageebene M an dem Türrahmen 12 befestigt werden. Die Montageebene M entspricht dann ebenfalls der Ebene der Oberfläche des Türrahmens 12, auf der der Verschlusshalter 10 angebracht ist.

Weiterhin weist der Verschlusshalter 10 ein Halteelement 2 auf, welches über zwei Stützen 1.1 mit diesem verbunden ist. Da die beiden Stützen 1.1 dieselbe Höhe aufweisen und senkrecht auf dem Montageelement 1 angeordnet sind, erstreckt sich das Halteelement 2 im Wesentlichen parallel zu dem Montageelement 1 bzw. zu der Montageebene M.

Zur Verriegelung der Tür 11 wird nun der Verschlussriegel 7 in den Zwischenraum zwischen der Montageebene M bzw. dem Montageelement und dem Halteelement 2 verdreht, so dass dann der Verschlussriegel 7 nicht mehr in senkrechter Richtung zur Montageebene M bewegt werden kann und die Tür 11 gegenüber dem Rahmen 12 festgelegt ist. Die Position des Halteelements 2 bzw. der Abstand des Halteelements 2 gegenüber der Montageebene M definiert somit die Schließposition der Tür 11.

Zwischen der Tür 11 und dem Rahmen 12 ist eine Türdichtung angeordnet, die in den Figuren jedoch nicht mit dargestellt ist. Diese Türdichtung wird in der geschlossenen Stellung der Tür 11 komprimiert, so dass die Tür 11 in der geschlossenen Stellung nicht klappert und nicht bewegbar ist. Zudem kann die Dichtung auch dafür sorgen, dass ein Gasaustauch zwischen dem Innenraum und dem Außenraum verhindert oder zumindest verringert wird. Aufgrund der Komprimierung der Dichtung wirkt diese zumindest eine gewisse Kraft auf die Tür 11 in Richtung der geöffneten Stellung und drückt den Verschlussriegel 7 somit aus Richtung des Montageelements 1 auf das Halteelement 2. Die der Montageebene M zugewandte Seite des Halteelement 2 fungiert dann als Haltefläche 3, an der der Verschlussriegel 7 in der verriegelten Stellung anliegt.

Um Fertigungstoleranzen oder ggf. auch Alterungserscheinungen der Dichtungen auszugleichen, ist zusätzlich ein Halteschuh 5 vorgesehen. Die Funktion und die Ausgestaltung des Halteschuhs 5 wird nun nachfolgend insbesondere anhand der Fig. 1 bis 6 näher beschrieben.

Der Halteschuh 5 ist lösbar mit dem Halteelement 2 verbunden und kann in einer parallel zu der Montageebene M ausgerichteten Montagerichtung MR von vorne auf das Halteelement 2 aufgeschoben werden. Durch den Halteschuh 5 wird der sich zwischen dem Halteelement 2 und dem Montageelement 1 befindliche Zwischenraum verkleinert, was entsprechend auch zu einer Verschiebung der Haltefläche 3 in Richtung der Montageebene M führt. Der Halteschuh 5 führt somit dazu, dass der Verschlussriegel 1 sich in der Verriegelungsstellung V näher an der Montageebene M und damit auch näher an dem Türrahmen 12 befindet. Demnach wird dann auch die Tür 11 in der geschlossenen Stellung stärker auf die Dichtung gedrückt. Wie dies weiterhin zu erkennen ist, ist es nicht erforderlich, den Halteschuh 5 mittels eines Werkzeugs mit dem Halteelement 2 zu verbinden, sondern der Halteschuh kann einfach per Hand auf das Halteelement 2 aufgesteckt werden und er verrastet dann selbstständig mit dem Halteelement 2 und/oder mit den Stützen 1.1, was nachfolgend noch näher beschrieben wird.

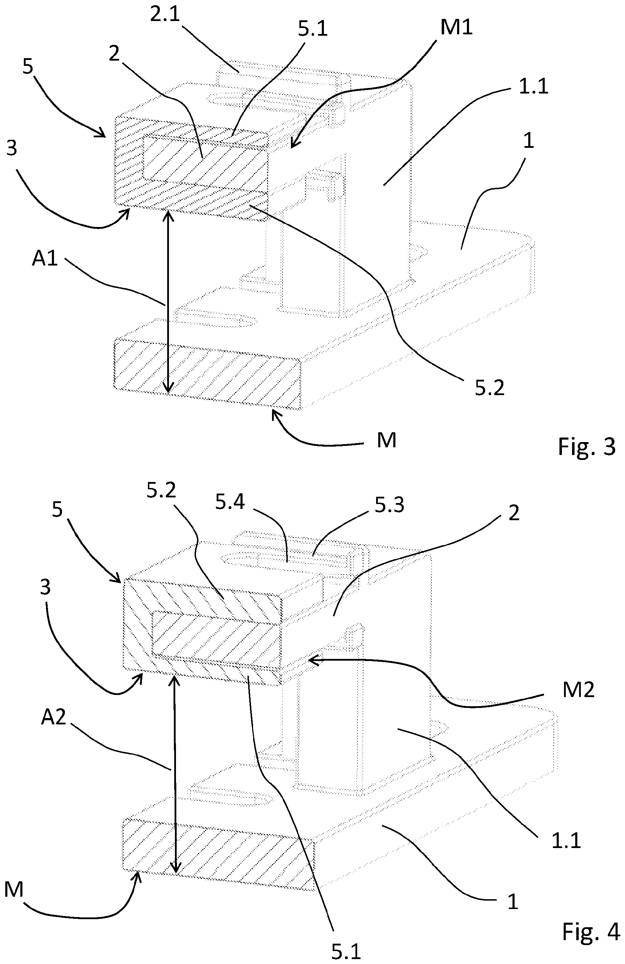

Der Halteschuh 5 kann in zwei verschiedenen Montagepositionen M1, M2 mit dem Halteelement 2 verbunden werden. Die Montageposition M1 ist in der Schnittansicht der Fig. 3 und die Montagposition M2 in der Schnittansicht der Fig. 4 dargestellt. Ferner ist zu erkennen, dass der Halteschuh 5 zwei Schenkel 5.1 und 5.2 umfasst, die eine unterschiedliche Dicke aufweisen. Der Schenkel 5.1 ist dabei deutlich dünner als der Schenkel 5.2 und dieser weist nur in etwa die halbe Dicke des Schenkels 5.2 auf. Sowohl bei der Darstellung der Fig. 3 als auch bei der der Fig. 4 handelt es sich um denselben Halteschuh 5 in unterschiedlichen Montagepositionen M1, M2. Der Halteschuh 5 ist demnach einmal so auf das Halteelement 2 aufgesteckt, dass der dickere Schenkel 5.2 der Montageebene M zugewandt ist und einmal andersherum, so dass der dünnere Schenkel 5.2 der Montageebene M zugewandt ist. Der Halteschuh 5 wurde also entsprechend einmal um 180 Grad gedreht.

Weiterhin ist zu erkennen, dass durch die verschiedenen Schenkeldicken auch der Abstand A1, A2 der Haltefläche 3 zur Montageebene M in jeder Montageposition M1, M2 unterschiedlich ist. Die Haltefläche 3 bezeichnet jeweils die Fläche des Schenkels 5.1, 5.2, an der der Verschlussriegel 7 in der verriegelten Stellung anliegt, also jeweils die Fläche des Halteschuhs 5, die der Montageebene M zugewandt ist. Dadurch, dass in der Montageposition M1 der dickere Schenkel 5.2 der Montageebene M zugewandt ist, ist entsprechend auch der Abstand A1 der Haltefläche 3 gegenüber der Montageebene M geringer als in der zweiten Montageposition M2. Dies wird auch bei einem Vergleich der beiden Abstände A1 und A2 in den verschiedenen Montagepositionen M1 und M2 deutlich, die in den Fig. 3 und 4 gezeigt sind. Durch den Halteschuh 5 wird also somit die Möglichkeit geschaffen, den Abstand zwischen der Haltefläche 3 und der Montageebene M in drei verschiedenen Stufen einzustellen. Wenn kein Halteschuh 5 verwendet ist, ist der Abstand am größten und der Verschlussriegel 7 hintergreift in der Verriegelungsstellung V das Halteelement 2 und liegt dann an diesem an. Wird der Halteschuh 5 in der ersten Montageposition M1 verwendet, so verkleinert sich der Abstand auf den Abstand A1, und wenn der Halteschuh 5 in der zweiten Montagposition M2 verwendet wird, verkleinert sich der Abstand noch weiter auf den Abstand A2.

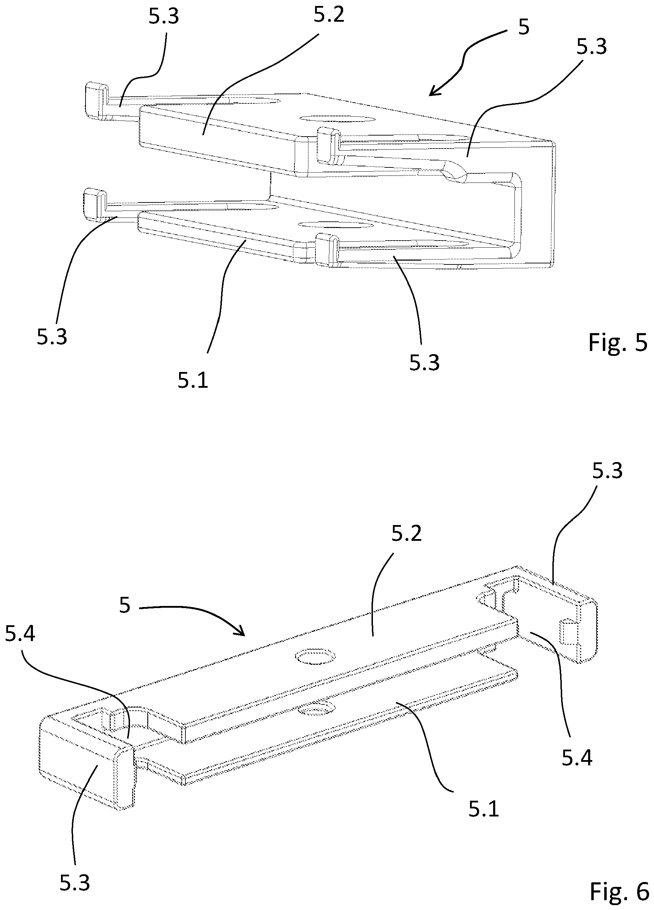

In den Fig. 5 und 6 sind nun zwei verschieden ausgestaltete Halteschuhe 5 gezeigt. Der Halteschuh 5 gemäß Fig. 5 entspricht dabei dem, der auch in den Fig. 1 und 2 dargestellt ist. Die beiden Schenkel 5.1, 5.2 sind zueinander parallel und umgreifen das Halteelement 2 in der aufgesteckten Stellung. Damit das Halteelement 5 möglichst zuverlässig auf das Halteelement 2 aufgesteckt werden kann, weist das Halteelement 2 eine Führung 2.1 auf, die aus zwei parallelen Stegen besteht, so wie dies in der Darstellung der Fig. 1 zu erkennen ist. In der aufgesteckten Stellung liegt der Halteschuh 5 dann zwischen diesen beiden Stegen, die insofern 5 als Linearführung dienen.

Damit der Halteschuh 5 auch dann zuverlässig an dem Halteelement 2 gehalten wird, wenn der Verschlussriegel 7 in die Entriegelungsstellung E bewegt wird und dabei auf den Halteschuh 5 abgleitet, weist der Halteschuh 5 vier Federarme 5.3 auf, von denen sich jeweils einer auf jeder Seite der beiden Schenkel 5.1, 5.2 befindet. Damit die Federarme 5.3 mit dem Halteelement 2 verrasten können, weist jeder Federarm 5 eine Rastnase auf, von denen dann je nach Montageposition M1, M2 des Halteschuhs 5 jeweils zwei hinter das Halteelement 2 greifen, so wie dies in der Darstellung der Fig. 3 und 4 zu erkennen ist. Die Rastnasen aller vier Federarme 5.3 weisen dabei in dieselbe Richtung. Weiterhin weist der Halteschuh 5 sich zwischen den Federarmen 5.3 und den Schenkeln 5.1, 5.2 erstreckende Aufnahmen 5.4 auf, die in der Darstellung der Fig. 1 gut zu erkennen sind. Auf die Funktion dieser Aufnahmen 5.4 wird nachfolgend im Hinblick auf den Anschlag 6 noch näher eingegangen werden.

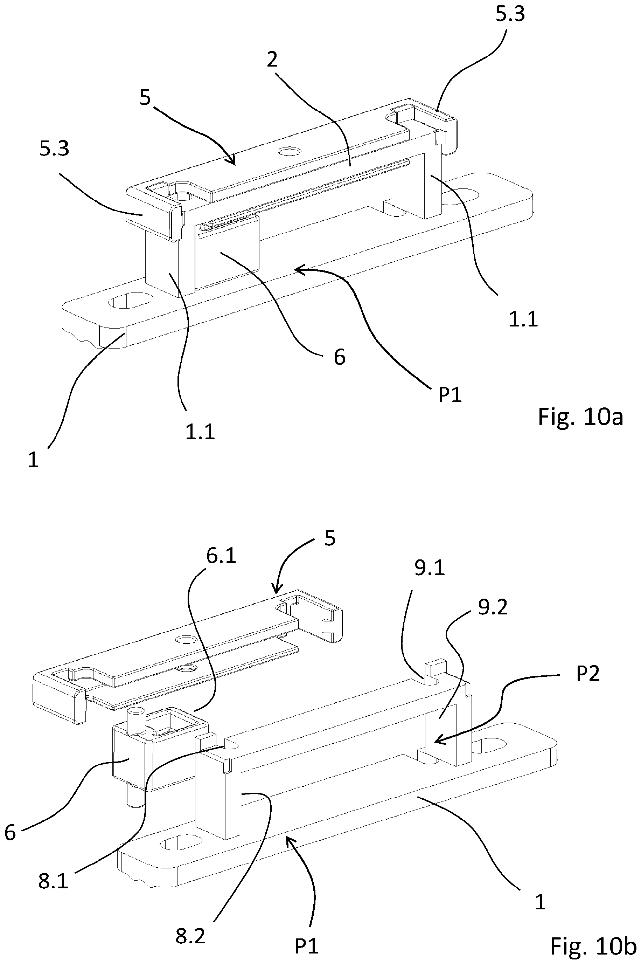

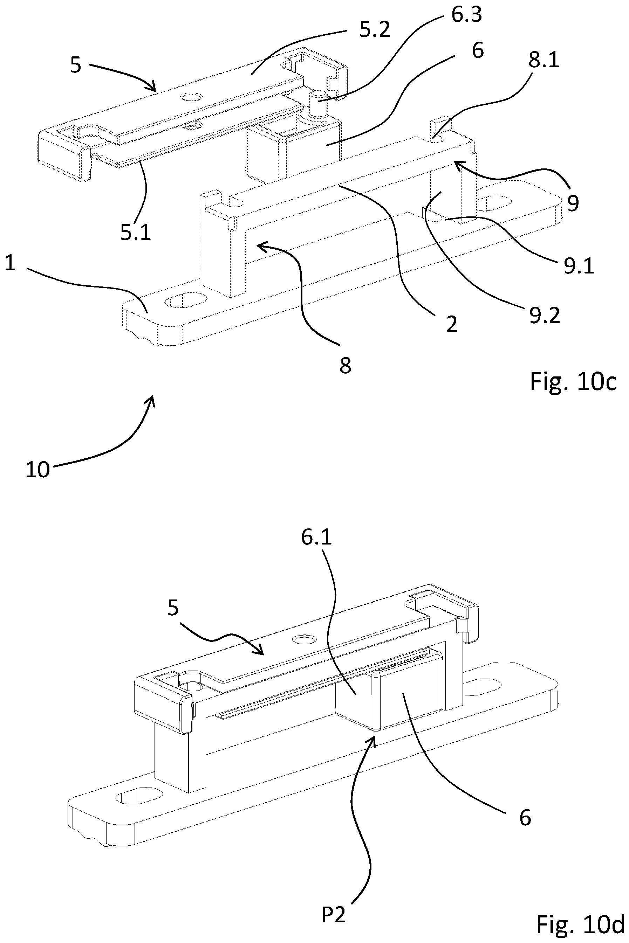

In der Fig. 6 ist der Halteschuh 5 in einer zweiten Ausgestaltung gezeigt. Auch die Schenkel 5.1, 5.2 dieser Ausgestaltung erstrecken sich parallel zueinander und umgreifen das Halteelement 2 von oben und von unten. Im Unterschied zu dem Halteschuh 5 gemäß Fig. 5 ist es bei dieser Ausgestaltung jedoch so, dass der Halteschuh 5 nur zwei Federarme 5.3 aufweist, die sich über die komplette Höhe des Halteschuhs 5 erstrecken. Auch ist dieser Halteschuh 5 länger, so dass er mit den Federarmen 5.2 das komplette Halteelement 2 umgreifen kann, wie dies in den Darstellungen der Fig. 10a und 10b zu erkennen ist. Da dieser Halteschuh 5 über die seitlich an dem Halteelement 5 bzw. an den Stützen 1.1 anliegenden Federarme 5.3 beim Aufstecken geführt wird, ist bei dieser Ausgestaltung eine zusätzliche Führung 2.1 am Halteelement 2 nicht unbedingt erforderlich.

Weiterhin ist in den Fig. 10a und 10b zu erkennen, dass auch die zwei Federarme 5.3 jeweils eine Rastnase aufweisen, die einander zugewandt sind. Diese Rastnasen umgreifen das Halteelement 2 bzw. die Stützen 1.1 und sorgen dann ganz analog zu der im Hinblick auf die Ausgestaltung gemäß der Fig. 5 beschriebenen Federarme 5.3 dafür, dass der Halteschuh 5 sicher an dem Halteelement 2 gehalten wird. Weiterhin weist bei dieser Ausgestaltung das Halteelement 2 im oberen Endbereich Einkerbungen auf, in die die Rastnasen der Federarme 5.3 eingreifen können. Die entsprechenden Einkerbungen sind bspw. in der Fig. 10b zu erkennen.

Im Hinblick auf die Werkstoffauswahl für den Halteschuh 5 haben sich in der Praxis besonders solche Werkstoffe als vorteilhaft erwiesen, die gute Gleiteigenschaften aufweisen. Dies hat im Wesentlichen zwei Gründe. Die Verschlussriegel 7 müssen eine hohe Festigkeit aufweisen und sind daher in der Regel aus Metall und zur Verhinderung von Korrosion meist aus verzinktem Metall. Da nun der Verschlussriegel 7 beim Hintergreifen der Haltefläche 3 auf dieser Fläche abgleitet, kann es ggf. dazu kommen, dass die verzinkte Oberfläche der Verschlussriegel 7 abgerieben wird, was dann mit einer erhöhten Korrosionsgefahr einhergeht. Wenn der Halteschuh 5 und insbesondere die entsprechenden Oberflächen des Halteschuhs 5, auf denen der Verschlussriegel 7 abgleitet, gute Gleiteigenschaften aufweist, verringert sich dadurch die Gefahr des Materialabtrags.

Darüber hinaus kann es auch dazu kommen, dass der Halteschuh 5 bei einem zu hohen Druck des Verschlussriegels 7 auf die Haltefläche 3, den Halteschuh 5 bei einer Drehung des Verschlussriegels 7 in die Entriegelungsstellung E mitnimmt und diesen somit von dem Halteelement 2 zieht. Insofern ermöglichen gute Gleiteigenschaften auch, dass der Halteschuh 5 sieher auf dem Haltelement 2 gehalten werden kann. Mögliche Materialien für den Halteschuh 5 sind bspw. Kunststoff, insbesondere POM, Messing oder Bronze. Weiterhin können auch Oberflächenbeschichtungen verwendet werden, um die Gleiteigenschaften zu verbessern.

Wenngleich mit dem Halteschuh 5 der Abstand A1, A2 zwischen der Haltefläche 3 und der Montageebene M und darüber auch die Schließposition der Tür 11 gegenüber dem Rahmen 12 eingestellt werden kann, ergibt sich weiterhin ein Problem, wenn die Tür 11, bspw. von einem linken Anschlag auf einen rechten Anschlag, umgerüstet werden soll.

Eine links angeschlagene Tür 11 ist bspw. in der linken Darstellung der Fig. 7 zu erkennen. Die Tür 11 weist einen Verschluss 14 auf, der die Tür 11 in der Verrieglungsstellung V gegenüber dem Rahmen 12 festgelegt, so dass die Tür 11 dann nicht mehr geöffnet werden kann. Der entsprechende Verschluss 14 weist dabei einen drehbaren Verschlussriegel 7 und einen Verschlusshalter 10 auf, so wie dies bereits vorstehend beschrieben wurde. Die mittlere und die rechte Darstellung der Fig. 7 verdeutlichen nun, wie die links angeschlagene Tür 11 umgerüstet werden kann, so dass diese dann rechts abgeschlagen ist.

Zunächst wird die Tür 11 dafür komplett von dem Rahmen 12 gelöst und dann um 180 Grad gedreht. Dabei müssen die rahmenseitigen Elemente des Verschlusses 14 von der rechten Seite des Rahmens 12 gelöst und dann auf der linken Seite des Rahmens 12 wieder montiert werden. Entsprechendes kann auch für die Türscharniere gelten. Wenn die Tür 11 dann um 180 Grad gedreht und wieder am Rahmen 12 befestigt wurde, kann diese zwar wieder geöffnet, geschlossen und über den Verschluss 14 auch wieder verriegelt werden. Wie dies bei einem Vergleich der rechten und der mittelten Darstellung der Fig. 7 jedoch auffällt, ändert sich beim Umdrehen der Tür 11 auch die Orientierung des Griffhebels 13. Denn dieser zeigt nunmehr nicht mehr nach unten, sondern nach oben, was jedoch in der Regel nicht gewünscht ist. Nachfolgend wird nun beschrieben, wie der Verschluss 14 umgerüstet werden kann, ohne dass dieser oder der Griffhebel 11 demontiert werden muss.

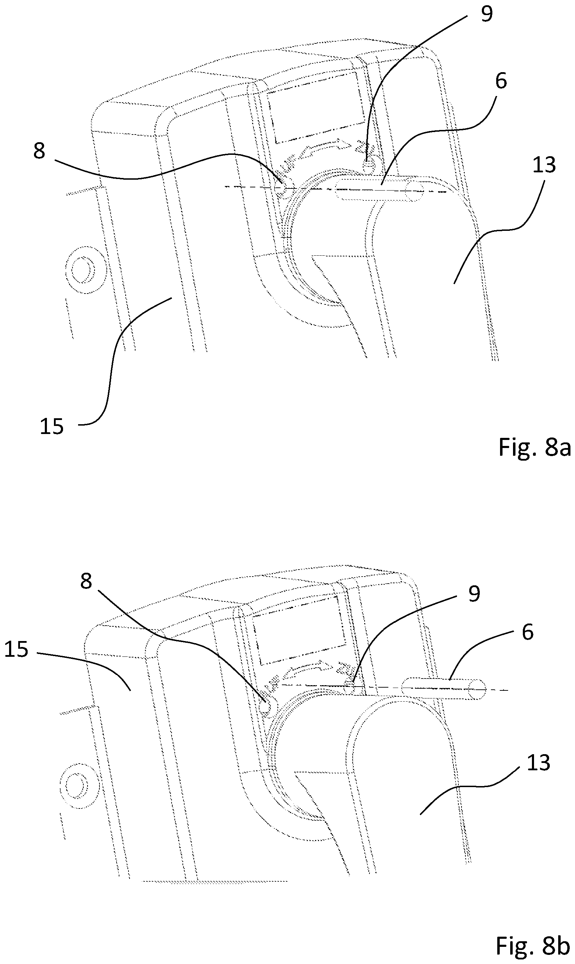

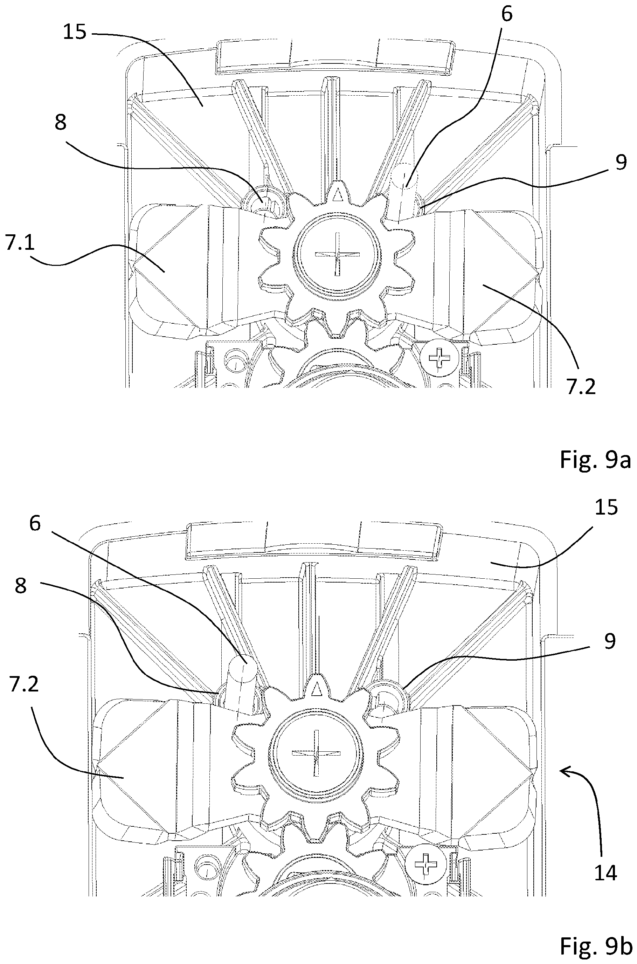

Eine erste Ausgestaltung soll zunächst anhand der Fig. 8a, b und 9a, b beschrieben werden. In den Fig. 8a, b ist das Riegelgehäuse 15 mit dem daran angeordneten Griffhebel 13 gezeigt, der auf der Innenseite des Riegelgehäuses 15 mit dem Verschlussriegel 7 drehgekoppelt ist. Das Riegelgehäuse 15 weist zwei als Einstecköffnungen ausgestaltete Anschlagaufnahmen 8, 9 auf, in die der als Anschlagsstift ausgestaltete Anschlag 6 wahlweise einsteckbar ist. Das Innenleben des Riegelgehäuses 15 ist den Fig. 9a und 9b zu erkennen. Durch die Positionierung des Anschlags 6 in den verschiedenen Anschlagaufnahmen 8, 9 können somit eine Bewegung des Verschlussriegels 7 in unterschiedlichen Drehbereichen begrenzt werden.

In der Fig. 9a ist der Verschlussriegel 7 in einer Verriegelungsstellung V gezeigt. Der Verschlusshalter 10 ist nicht dargestellt. Der Verschlussriegel 7 ist als Doppelverschlussriegel ausgestaltet und weist zwei einander gegenüberliegende Riegelelemente 7.1 und 7.2 auf. In der Stellung gemäß Fig. 9a liegt zunächst das Riegelelement 7.2 an dem in der Anschlagaufnahme 9 steckenden Anschlag 6 an, so dass der Verschlussriegel 7 nur im Uhrzeigersinn, nicht jedoch entgegen dem Uhrzeigersinn gedreht werden kann, da der Anschlag 6 diese Drehbewegung verhindert. Wird der Verschlussriegel 7 nun im Uhrzeigersinn verdreht, wird das Riegelelement 7.2 aus dem nicht dargestellten Verschlusshalter 10 ausgeschwenkt und die Tür 11 kann geöffnet werden. Der Verschlussriegel 7 kann dabei so weit gedreht werden, bis das Riegelelement 7.1 an der anderen Seite des Anschlags 6 anliegt. Der Anschlag 6 verhindert somit, dass der Griffhebel 13 und damit auch der Verschlussriegel 7 so weit gedreht werden kann, dass das Riegelelement 7.1 in den Verschlusshalter 10 eingreift.

In der Darstellung der Fig. 9b ist der Anschlag 6 in die andere Anschlagaufnahme 8 eingesteckt. Der Verschlussriegel 7 kann nun aus dieser Stellung nur entgegen dem Uhrzeigersinn gedreht werden und zwar nur so weit, bis das Riegelelement 7.1 an der rechten Seite des Anschlags 6 anschlägt. Wenngleich in den Darstellungen der Fig. 9a und 9b der Verschlussriegel 7 als Doppelverschlussriegel ausgestaltet ist, funktioniert die Vorrichtung in gleichem Maße auch mit Verschlussriegeln 7, die nur ein Riegelelement 7.1 aufweisen. Der einzige Unterschied besteht dann darin, dass der Griffhebel 13 um ca. 180 Grad weiter verschwenkt werden kann als bei der Ausgestaltung mit einem Doppelverschlussriegel.

Um die Tür 11 nun bspw. von einem linken Türanschlag auf einen rechten Türanschlag umzurüsten, muss zunächst der Anschlag 6 aus der jeweiligen Anschlagaufnahme 8, 9 herausgezogen werden. Der Griffhebel 13 sowie der Verschlussriegel 7 können dann frei gedreht werden, so dass der Griffhebel 13 in die gewünschte, nach unten weisende Stellung gedreht werden kann, so wie dies in der rechten Darstellung der Fig. 7 zu erkennen ist. In einem nächsten Schritt kann dann der Anschlag 6 in die passende Anschlagaufnahme 8 oder 9 eingesteckt werden und die in der Außenseite des Riegelgehäuses 15 angeordneten Löcher können, bspw. über Kappen, verschlossen werden.

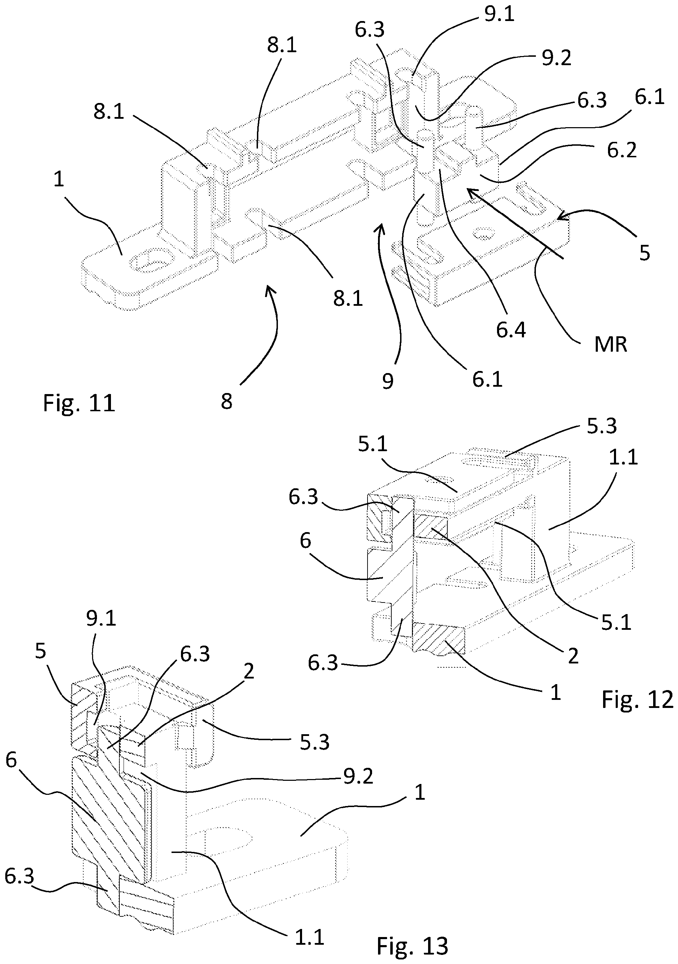

Als Alternative zu der Anordnung der Anschlagaufnahmen 8, 9 bzw. des Anschlags 6 am Riegelgehäuse 15 können die Anschlagaufnahmen 8, 9 auch an dem Verschlusshalter 10 angeordnet sein. Bei dieser Ausgestaltung muss dann die Außenseite des Riegelgehäuses 15 keine Einstecköffnungen für den Anschlag 6 mehr aufweisen. Diese Ausgestaltung soll nachfolgend zunächst anhand der Darstellung in der Fig. 11 und 12 beschrieben werden. Wie dies insbesondere in der Fig. 11 zu erkennen ist, weist der Verschlusshalter 10 zwei Anschlagaufnahmen 8, 9 auf, die auf verschiedenen Seiten des Verschlusshalters 10 angeordnet sind und die im Wesentlichen zwischen dem Montageelement 1 und dem Halteelement 2 angeordnet sind. Sowohl das Halteelement 2 als auch das Montageelement 1 weisen für jede der beiden Anschlagaufnahmen 8, 9 jeweils zwei Aussparungen 8.1, 9.1 auf, die sich nach Art von Langlöchern in das Montageelement 1 und in das Halteelement 2 in Montagerichtung MR hinein erstrecken. Der Anschlag 6 weist bei dieser Ausgestaltungsform insgesamt vier nach Art von Stiften oder Bolzen ausgestaltete Führungselemente 6.3 auf, die beim Einstecken des Anschlags 6 in die jeweilige Anschlagaufnahme 8, 9 in den Aussparungen 8.1, 9.1 geführt werden. Der Anschlag 6 ist somit in Montagerichtung MR wahlweise entweder in die Anschlagaufnahme 8 oder in die Anschlagaufnahme 9 einsteckbar und kann entsprechend auch wieder aus den Anschlagaufnahmen 8, 9 entnommen werden.

Zur Befestigung des Anschlags 6 am Verschlusshalter 10 dient der Halteschuh 5, dem somit eine Doppelfunktion zukommt. Denn der Halteschuh 5 dient nicht nur zur Einstellung des Abstandes A1, A2 der Haltefläche 3 von der Montageebene M, sondern er dient ebenfalls zur Sicherung des Anschlags 6 in der entsprechenden Anschlagaufnahme 8, 9 des Verschlusshalters 10. Wie dies bereits vorstehend beschrieben wurde, kann der Halteschuh 5 mit dem Halteelement 2 und/oder mit den Stützen 1.1 verrastet werden. In dieser Raststellung umgreifen die zwischen den Federarmen 5.3 und den Schenkeln 5.1, 5.2 angeordneten Aufnahmen 5.4 die oberen beiden Führungselemente 6.3 des Anschlags 6 und halten diese somit in den Aussparungen 8.1, 9.1 der jeweiligen Anschlagaufnahme 8, 9. Der Anschlag 6 ist dann formschlüssig zwischen dem Halteschuh 5 und dem Montagelement 1 sowie dem Halteelement 2 aufgenommen. Weiterhin weisen die Anschlagaufnahmen 8, 9 zudem auch eine Anlagefläche 8.2, 9.2 auf, die jeweils Teil einer der Stützen 1.1 sind. Diese Anlageflächen 8.2, 9.2 dienen als zusätzliche Abstützung und sorgen somit dafür, dass die auf die Führungselemente 6.3 wirkenden Kräfte verringert werden, insbesondere wenn der Verschlussriegel 7 am Anschlag 6 anschlägt. In der Schnittansicht der Fig. 12 ist noch einmal verdeutlicht dargestellt, wie die Führungselemente 6.3 in der Montageaufnahme 1, dem Halteelement 2 und dem Halteschuh 5 aufgenommen sind. Der das Halteelement 2 umgreifende Halteschuh 5 drückt das Führungselement 6.3 sowohl oberhalb als auch unterhalb des Halteelements 2 in die entsprechende Aussparung 8.1, 9.1 der jeweiligen Anschlagaufnahme 8, 9 und sorgt dann, wenn er mit dem Halteelement 2 oder mit den Stützen 1.1 verrastet ist, dafür, dass der Anschlag 5 sicher in der entsprechenden Anschlagaufnahme 8, 9 gehalten wird.

Weiterhin ist insbesondere in der Fig. 11 zu erkennen, dass der Anschlag 6 am oberen Ende zwei Rücksprünge 6.4 aufweist. Wenn der Anschlag 6 vom Halteschuh 5 in der Anschlagaufnahme 8, 9 gehalten wird, liegt das sich auf der Seite der verwendeten Anschlagaufnahme 8, 9 befindliche untere Federelement 5.3 in dem zur Mitte des Verschlusshalters 10 weisenden Rücksprung 6.4. Der Rücksprung 6.4 sorgt somit dafür, dass das entsprechende Führungselement 6.3 auch unterhalb des Halteelements 2 von der unteren Aufnahme 5.4 umgriffen werden kann. Dies ist auch in der Darstellung der Fig. 2 zu erkennen, in der der Anschlag 6 in der rechten Anschlagaufnahme 9 angeordnet ist. Wird der Anschlag 6 in der linken Anschlagaufnahme 8 angeordnet, umgreift der Halteschuh 5 das entsprechend andere Führungselement 6.3 des Anschlags 6.

Nachfolgend wird nun anhand der Darstellungen der Fig. 10a bis 10d eine weitere Ausgestaltung des Anschlags 6 und der Anschlagaufnahmen 8, 9 beschrieben. Bei dieser Ausgestaltung ist der Halteschuh 5 länger ausgestaltet als der in den Fig. 2 und 11 dargestellte Halteschuh 5 und zudem weist der Halteschuh 5 bei dieser Ausgestaltung nur zwei Federarme 5.3 und nicht vier Federarme 5.3 auf. Ferner unterscheidet sich der Anschlag 5 von dem vorstehend beschriebenen Anschlag 5 weiterhin dadurch, dass dieser nur zwei Führungselemente 6.3 aufweist und die Anschlagaufnahmen 8, 9 entsprechend ebenfalls nur zwei Aussparungen 8.1, 9.1, jeweils eine im Montageelement 1 und im Halteelement 2, aufweisen. Das Montageelement 1 und das Halteelement 2 sind daher bei dieser Ausgestaltung stabiler.

Der Halteschuh 5 weist ebenfalls eine zwischen den Federarmen 5.3 und den Schenkeln 5.1, 5.2 angeordnete Aufnahme 5.4 auf. Bei dieser Ausgestaltung dient die Aufnahme 5.4 jedoch nicht dazu, die Führungselemente 6.3 in der jeweiligen Aussparung 8.1, 9.1 zu halten, sondern auch dazu, die Stützen 1.1 seitlich nach Art einer Klammer zu umgreifen, so wie dies im Hinblick auf das Halteelement 5 bereits beschrieben wurde. Im Gegensatz zu der Ausgestaltung mit den vier Aussparungen 8.1, 9.1 pro Anschlagaufnahme 8, 9 kommt bei dieser Ausgestaltung der Anlagefläche 8.2, 9.2 eine größere Bedeutung zu. Denn die Anlagefläche 8.2, 9.2 sorgt dafür, dass sich der Anschlag 6 nicht verdreht, wenn der Verschlussriegel 7 an diesem anschlägt. Eine entsprechende Schnittansicht durch den Anschlag 6 und den Verschlusshalter 10 ist in der Fig. 13 dargestellt.

Wie dies weiterhin in den Fig. 10a bis 10d zu erkennen ist, kann der Anschlag 6 beliebig zwischen den beiden Anschlagaufnahmen 8, 9 hin und her gewechselt werden. In der Darstellung der Fig. 10a befindet sich der Anschlag 6 zunächst in der ersten Anschlagposition P1 in der Anschlagaufnahme 8. Nachdem der Halteschuh 5 von dem Halteelement 2 entfernt wurde, kann der Anschlag 6 per Hand aus der Anschlagaufnahme 8 entnommen, um 180 Grad gedreht und dann in die Anschlagaufnahme 9 eingesetzt werden. Zum Schluss wird dann der Halteschuh 5 wieder auf das Halteelement 2 aufgesteckt, um den Anschlag 6 in der Anschlagaufnahme 9 zu sichern. Diese Stellung ist in der Fig. 10d dargestellt.

Anhand der Fig. 14a bis 14d soll nun nachfolgend die Entriegelung des Verschlusses 14 näher erläutert werden. In der Stellung, die in der Fig. 14a gezeigt ist, befindet sich der Verschluss 14 bzw. der Verschlussriegel 7 in der Verriegelungsstellung V. Der Anschlag 5 ist am Verschlusshalter 10 angeordnet und steckt in der Anschlagaufnahme 9 in der Anschlagposition P1. In der Verrieglungsstellung V liegt das Riegelelement 7.1 des Verschlussriegels 7 an einer Verriegelungsanschlagfläche 6.1 an. Diese Anschlagfläche 6.1 ist bspw. auch in der Fig. 11 zu erkennen. Es handelt sich um die Anschlagfläche 6.1 an die der Verschlussriegel 7 in der Verriegelungsstellung V anliegt. Diese Verriegelungsanschlagfläche 6.1 ist je nach Anschlagposition P1, P2 entweder links oder rechts am Anschlag 6 angeordnet und weist immer zur Mitte des Verschlusshalters 10.

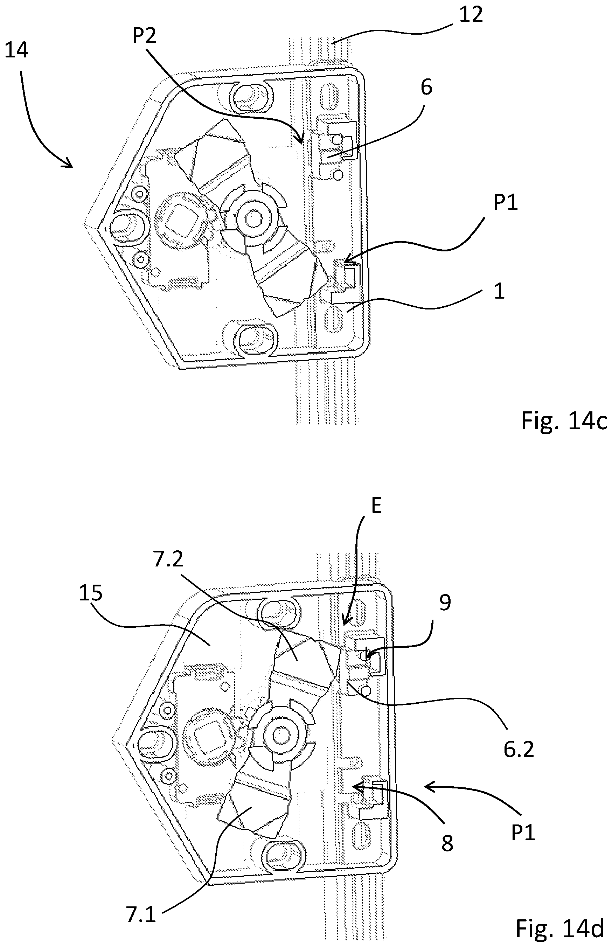

Zur Entriegelung muss nun der Verschlussriegel 7 im Uhrzeigersinn gedreht werden, so wie dies in der Fig. 14a durch einen Pfeil angedeutet ist. Bei dieser Drehbewegung durchläuft er die in den Fig. 14 b und c dargestellten Stellungen. Sobald das Riegelelement 7.1 dann aus dem Verschlusshalter 10 ausgeschwenkt ist und das Riegelelement 7.1 die Haltefläche 3 des Verschlusshalters 10 nicht mehr hintergreift, kann die Tür 11 geöffnet werden. Diese Entriegelungsstellung E ist in der Fig. 14 d dargestellt. Es ist zu erkennen, dass in dieser Stellung das Riegelelement 7.2 an dem Anschlag 6 bzw. an der Entriegelungsanschlagfläche 6.2 anschlägt und dadurch eine weitergehende Drehung des Verschlussriegels 7 in Entriegelungsrichtung nicht mehr möglich ist. Die Entriegelungsanschlagfläche 6.2 ist ebenfalls in der Darstellung der Fig. 11 zu erkennen.

Wenn nun der Anschlag 6 aus der Anschlagaufnahme 9 hinausgezogen und in die Anschlagaufnahme 8 eingesteckt wird, ergibt sich ein anderes Anschlagsbild. Ausgehend von der Stellung in der Fig. 14d ist dann der Verschlussriegel 7 weiter im Uhrzeigersinn drehbar, bis das Riegelende 7.2 dann an dem sich in der Anschlagposition P1 befindlichen Anschlag 6 anschlägt. Das Riegelelement 7.2 liegt dann in dieser Verriegelungsstellung V an der Verriegelungsanschlagfläche 6.1 des Anschlags an. Bei der Verriegelungsanschlagfläche 6.1 handelt es sich jedoch um nicht um dieselbe Fläche, an der das Riegelelement 7.1 anschlägt, wenn sich der Anschlag 6 in der Anschlagposition P1 befindet, so wie dies vorstehend beschrieben wurde, sondern die Verriegelungsanschlagfläche 6.1 liegt dieser Fläche gegenüber, wie dies bspw. auch anhand der Fig. 11 ersichtlich ist. Wenn der Verschlussriegel 7 dann ausgehend von dieser Position entgegen dem Uhrzeigersinn in die Entriegelungsstellung E verdreht wird, schlägt das Riegelelement 7.1 an der Entriegelungsanschlagfläche 6.2 des Anschlags 6 an und begrenzt so eine weitergehende Drehung des Verschlussriegels 7.

Durch das Umstecken des Anschlags 6 zwischen den beiden Anschlagaufnahmen 8, 9 kann somit die Drehbewegung des Verschlussriegels 7 gesteuert werden. Da je nach Anschlagposition einmal das Riegelelement 7.2 und einmal das Riegelelement 7.1 die Haltefläche 3 des Verschlusshalters 10 hintergreift und der Verschlusshalter 10 mit dem Griffhebel 13 verbunden ist, kann somit dann auch die Stellung des Griffhebels 13 in der Verriegelungsstellung V und der Entriegelungsstellung E eingestellt werden.

### Bezugszeichen:

- 1: Montageelement
- 1.1: Stütze
- 2: Halteelement
- 2.1: Führung
- 3: Haltefläche
- 5: Halteschuh
- 5.1: Schenkel
- 5.2: Schenkel
- 5.3: Federarm
- 5.4: Aufnahme
- 6: Anschlag
- 6.1: Verriegelungsanschlagfläche
- 6.2: Entriegelungsanschlagfläche
- 6.3: Führungselement
- 6.4: Rücksprung
- 7: Verschlussriegel
- 7.1: Riegelelement
- 7.2: Riegelelement
- 8: Anschlagaufnahme
- 8.1: Aussparung
- 8.2: Anlagefläche
- 9: Anschlagaufnahme
- 9.1: Aussparung
- 9.2: Anlagefläche
- 10: Verschlusshalter
- 11: Tür
- 12: Türrahmen
- 13: Griffhebel
- 14: Verschluss
- 15: Riegelgehäuse

- A1: Abstand
- A2: Abstand
- M: Montageebene
- MR: Montagerichtung
- M1: Montageposition
- M2: Montageposition
- V: Verriegelungsstellung
- E: Entriegelungsstellung
- P1: Anschlagposition
- P2: Anschlagposition

## Patentansprüche

1. Verschlusshalter mit einem Montageelement (1), über welches der Verschlusshalter (10) in einer Montageebene (M) an einem Türrahmen (12) befestigbar ist, und einer gegenüber der Montageebene (M) beabstandet angeordneten Haltefläche (3), die von einem türseitigen Verschlussriegel (4) zur Verriegelung der Tür (11) hintergreifbar ist, wobei ein Halteschuh (5) vorgesehen ist, der zur Einstellung des Abstandes (A) der Haltefläche (3) gegenüber der Montageebene (M) lösbar an einem Halteelement (2) befestigbar ist, wobei der Halteschuh (5) zur Einstellung des Abstandes (A1, A2) in zwei verschiedenen Montagepositionen (M1, M2) an dem Halteelement (2) befestigbar ist,
**dadurch gekennzeichnet,**
**dass** der Halteschuh (5) zwei Schenkel (5.1, 5.2) unterschiedlicher Dicke aufweist, wobei in der ersten Montageposition (M1) der dickere Schenkel (5.2) und in der zweiten Montageposition (M2) der dünnere Schenkel (5.2) der Montageebene (M) zugewandt ist.

2. Verschlusshalter nach Anspruch 1, **dadurch gekennzeichnet, dass** der Halteschuh (5) auf das Halteelement (2) aufsteckbar ist.

3. Verschlusshalter nach einem der vorhergehenden Ansprüche,
**dadurch gekennzeichnet, dass** der Halteschuh (5) in einer Montageposition (M1, M2) in Bezug zu der anderen Montageposition (M1, M2) um 180 Grad gedreht ist.

4. Verschlusshalter nach einem der einem der vorhergehenden Ansprüche, **dadurch gekennzeichnet, dass** in der ersten Montageposition (M1) der Abstand (A1) der Haltefläche (3) gegenüber der Montageebene (M) geringer ist als in der zweiten Montageposition (M2).

5. Verschlusshalter nach einem der vorhergehenden Ansprüche,
**dadurch gekennzeichnet, dass** die Haltefläche (3) und die Montageebene (M) parallel zueinander angeordnet sind.

6. Verschlusshalter nach einem der vorhergehenden Ansprüche,
**dadurch gekennzeichnet, dass** der Abstand (A1, A2) der Haltefläche (3) gegenüber der Montageebene (M) in Normalenrichtung einstellbar ist.

7. Verschlusshalter nach einem der vorhergehenden Ansprüche,
**dadurch gekennzeichnet, dass** das Halteelement (2) über zwei Stützen (1.1) mit dem Montageelement (1) verbunden ist.

8. Verschlusshalter nach einem der vorhergehenden Ansprüche,
**dadurch gekennzeichnet, dass** der Halteschuh (5) mindestens einen Federarm (5.3) aufweist, der mit dem Halteelement (2) und/oder den Stützen (1.1) verrasten kann.

9. Verschlusshalter nach einem der vorhergehenden Ansprüche,
**dadurch gekennzeichnet, dass** das Halteelement (2) eine Führung (2.1) für den Halteschuh (5) aufweist.

10. Verschlusshalter nach einem der vorhergehenden Ansprüche,
**dadurch gekennzeichnet, dass** sich der Halteschuh (5) über die gesamte Länge des Halteelements (2) erstreckt.

11. Verschlusshalter nach einem der vorhergehenden Ansprüche,
**dadurch gekennzeichnet, dass** der Halteschuh (5) eine Aufnahme (5.4) zur zumindest abschnittsweisen Aufnahme eines Anschlags (6) aufweist.

12. Verschlusshalter nach einem der vorhergehenden Ansprüche,
**dadurch gekennzeichnet, dass** der Halteschuh (5) aus Kunststoff, insbesondere aus einer POM-Kunststoff-Verbindung, hergestellt ist.

13. Verschluss mit einem Verschlusshalter (10) nach einem der vorhergehenden Ansprüche.

## Claims

1. A locking holder with a mounting element (1), via which the locking holder (10) can be fastened to a door frame (12) in a mounting plane (M), and with a holding surface (3) which is arranged spaced apart with respect to the mounting plane (M) and can be engaged behind by a door-side locking latch (4) in order to lock the door (11), wherein a holding shoe (5) is provided which can be fastened releasably to a holding element (2) in order to set the distance (A) of the holding surface (3) with respect to the mounting plane (M), wherein the holding shoe (5) can be fastened to the holding element in two different mounting positions (M1, M2) in order to set the distance (A1, A2),
**characterized in that**
the holding shoe (5) has two limbs (5.1, 5.2) of different thickness, wherein in the first mounting position (M1) the thicker limb (5.2) is facing the mounting plane (M) and in the second mounting position (M2) the thinner limb (5.1) is facing the mounting plane (M).

2. The locking holder as claimed in claim 1, **characterized in that** the holding shoe (5) can be plugged onto the holding element (2).

3. The locking holder as claimed in one of the preceding claims, **characterized in that** the holding shoe (5) is rotated in one mounting position (M1, M2) by 180 degrees in relation to the other mounting position (M1, M2).

4. The locking holder as claimed in one of the preceding claims, **characterized in that** the distance (A1) of the holding surface (3) with respect to the mounting plane (M) is smaller in the first mounting position (M1) than in the second mounting position (M2).

5. The locking holder as claimed in one of the preceding claims, **characterized in that** the holding surface (3) and the mounting plane (M) are arranged parallel to one another.

6. The locking holder as claimed in one of the preceding claims, **characterized in that** the distance (A1, A2) of the holding surface (3) with respect to the mounting plane (M) can be set in the perpendicular direction.

7. The locking holder as claimed in one of the preceding claims, **characterized in that** the holding element (2) is connected to the mounting element (1) via two supports (1.1).

8. The locking holder as claimed in one of the preceding claims, **characterized in that** the holding shoe (5) has at least one spring arm (5.3) which can latch with the holding element (2) and/or the supports (1.1).

9. The locking holder as claimed in one of the preceding claims, **characterized in that** the holding element (2) has a guide (2.1) for the holding shoe (5).

10. The locking holder as claimed in one of the preceding claims, **characterized in that** the holding shoe (5) extends over the entire length of the holding element (2).

11. The locking holder as claimed in one of the preceding claims, **characterized in that** the holding shoe (5) has a receptacle (5.4) for receiving a stop (6) at least in sections.

12. The locking holder as claimed in one of the preceding claims, **characterized in that** the holding shoe (5) is produced from plastic, in particular from a POM plastic compound.

13. A lock with a locking holder (10) as claimed in one of the preceding claims.

## Revendications

1. Support de fermeture comprenant un élément de montage (1), par lequel le support de fermeture (10) peut être fixé à un cadre de porte (12) dans un plan de montage (M), et une surface de retenue (3) qui est disposée à distance du plan de montage (M) et derrière laquelle un verrou de fermeture côté porte (4) peut s'engager afin de verrouiller la porte (11), un sabot de retenue (5) étant prévu qui peut être fixé de manière amovible à un élément de retenue (2) afin de régler la distance (A) de la surface de retenue (3) au plan de montage (M), le sabot de retenue (5) pouvant être fixé à l'élément de retenue (2) dans deux positions de montage différentes (M1, M2) afin de régler la distance (A1, A2),
**caractérisé en ce que**
le sabot de retenue (5) comporte deux branches (5.1, 5.2) d'épaisseurs différentes, dans la première position de montage (M1) la branche la plus épaisse (5.2) étant dirigée vers le plan de montage (M) et dans la deuxième position d'assemblage (M2) la branche la plus mince (5.2) étant dirigée vers le plan de montage (M).

2. Support de fermeture selon la revendication 1, **caractérisé en ce que** le s abot de retenue (5) peut être placé sur l'élément de retenue (2).

3. Support de fermeture selon l'une des revendications précédentes, **caractérisé en ce que** le sabot de retenue (5) est tourné de 180 degrés dans une position de montage (M1, M2) par rapport à l'autre position de montage (M1, M2).

4. Support de fermeture selon l'une des revendications précédentes, **caractérisé en ce que** la distance (A1) de la surface de retenue (3) au plan de montage (M) est plus petite dans la première position de montage (M1) que dans la deuxième position de montage (M2).

5. Support de fermeture selon l'une des revendications précédentes, **caractérisé en ce que** la surface de retenue (3) et le plan de montage (M) sont disposés parallèlement l'un à l'autre.

6. Support de fermeture selon l'une des revendications précédentes, **caractérisé en ce que** la distance (A1, A2) de la surface de retenue (3) au plan de montage (M) est réglable dans la direction normale.

7. Support de fermeture selon l'une des revendications précédentes, **caractérisé en ce que** l'élément de retenue (2) est relié à l'élément de montage (1) par deux montants (1.1).

8. Support de fermeture selon l'une des revendications précédentes, **caractérisé en ce que** le sabot de retenue (5) comporte au moins un bras à ressort (5.3) qui peut s'encliqueter à l'élément de retenue (2) et/ou aux montants (1.1).

9. Support de fermeture selon l'une des revendications précédentes, **caractérisé en ce que** l'élément de retenue (2) comporte un guide (2.1) destiné au sabot de retenue (5).

10. Support de fermeture selon l'une des revendications précédentes, **caractérisé en ce que** le sabot de retenue (5) s'étend sur toute la longueur de l'élément de retenue (2).

11. Support de fermeture selon l'une des revendications précédentes, **caractérisé en ce que** le sabot de retenue (5) comporte un logement (5.4) destiné à recevoir au moins par portions une butée (6).

12. Support de fermeture selon l'une des revendications précédentes, **caractérisé en ce que** le sabot de retenue (5) est en matière synthétique, notamment en un composé POM-matière synthétique.

13. Fermeture comprenant un support de fermeture (10) selon l'une des revendications précédentes.
